# EUROPÄISCHE PATENTSCHRIFT

(11) **EP 0 846 069 B1**
(45) Veröffentlichungstag und Bekanntmachung des Hinweises auf die Patenterteilung: **13.06.2001**
(21) Anmeldenummer: 96929307.5
(22) Anmeldetag: 22.08.1996
(51) Int. Cl.: B61D 17/04, B32B 3/12, E04C 2/36

(54) **PROFILE FÜR PLATTENFÖRMIGE VERBUNDELEMENTE**
PROFILE SECTIONS FOR PLATE-LIKE COMPOSITE ELEMENTS
PROFILES POUR ELEMENTS COMPOSITES SE PRESENTANT SOUS FORME DE PLAQUES

(30) Priorität: 25.08.1995 DE 19531349
(43) Veröffentlichungstag der Anmeldung: 10.06.1998
(73) Patentinhaber: Alusuisse Airex AG, 5643 Sins (CH)
(72) Erfinder: KOCHER, Laurent, CH-5610 Wohlen (CH); RYSAVY, Peter, CH-8004 Zürich (CH); SPIELER, Markus, CH-6331 Hünenberg (CH)
(74) Vertreter: Hano, Christian, Dipl.-Ing.
(86) Internationale Anmeldenummer: EP9603703
(87) Internationale Veröffentlichungsnummer: WO9708034

(56) Entgegenhaltungen:
- EP-A- 0 544 498

## Beschreibung

Die vorliegende Erfindung betrifft neue Profile zur Verwendung als Verstärkung oder Randabschluss von plattenförmigen Verbundelementen ("Sandwichelementen"), die mit diesen Profilen aufgebauten Verbundelemente, sowie ein Verfahren zur Herstellung dieser Verbundelemente.

Plattenförmige Verbundelemente, die im einfachsten Fall aus einer Kernschicht und zwei durch diese Kernschicht verbundenen und mit ihr flächig verklebten Deckschichten bestehen, wobei als Material für die Kernschicht im allgemeinen ein Hartschaum und für die Deckschichten Metallblech oder ein anderes zugfestes Material eingesetzt wird, finden wegen ihres geringen Gewichtes und ihrer günstigen mechanischen Eigenschaften in zunehmendem Umfang Verwendung als Konstruktionsmaterial. Insbesondere im Transportwesen, also im Bau von Nutzfahrzeugen aller Art wie beispielsweise Lastwagen, Omnibussen oder Schienenfahrzeugen oder von Frachtcontainern, werden sie vor allem für Boden-, Wand- und Deckenkonstruktionen eingesetzt.
Hier und im folgenden sind unter "plattenförmigen" Verbundelementen nicht ausschliesslich ebene Bauteile zu verstehen, sondern auch gewölbte Teile wie beispielsweise Waggondächer, deren Form im wesentlichen durch zylindrische Flächen oder eine Kombination von ebenen und zylindrischen Flächen beschrieben werden kann.
Wegen der begrenzten Stabilität dieser Verbundelemente bei örtlichen Spannungskonzentrationen, insbesondere durch punkt- oder linienförmig angreifende Kräfte senkrecht zu den Schichten und vor allem im Randbereich, ist es häufig erforderlich, an den entsprechenden Stellen, d. h. dort, wo Befestigungselemente zur Verbindung der Verbundelemente untereinander, mit anderen tragenden Konstruktionsteilen oder mit mechanisch belasteten Einbauten (z. B. Sitze, Haltestangen oder Gepäckablagen in Fahrzeugen für den Personentransport) angebracht werden müssen, Verstärkungselemente in Form von Profilen aus Metall oder einem anderen Material hoher Festigkeit einzubauen.
Als Randprofile werden hier und im folgenden solche Profile bezeichnet, die den Randabschluss eines Verbundelementes bilden oder zwei Verbundelemente an ihren Rändern miteinander verbinden (Verbindungsprofile). Als Einlageprofile werden solche Profile bezeichnet, die zu Verstärkungszwecken im Innern des Verbundelementes angeordnet sind, wobei die Kernschicht an der entsprechenden Stelle unterbrochen ist und die Deckschichten über das Profil hinweglaufen.
Sowohl die Kernschicht als auch die Deckschichten können homogen oder ihrerseits aus mehreren Schichten aufgebaut sein. So kann beispielsweise in einer Kernschicht aus Schaumstoff eine Verstärkungsschicht eingelegt sein oder eine Deckschicht kann beispielsweise aus Sperrholz bestehen.
Hergestellt werden die Verbundelemente üblicherweise derart, dass die Deckschichten, beispielsweise aus Aluminiumblech, das Kernmaterial und die Einlage- bzw. Randprofile mit einfachen Querschnitten, in der Regel gewöhnliche Vierkantprofile, zunächst an den Grenzflächen ein- oder beidseitig mit einem Klebstoff beschichtet werden. Anschliessend werden die einzelnen Teile in der gewünschten geometrischen Anordnung in einer Klebeform zusammengefügt und durch äusseren Druck flächig verklebt. Als äusserer Druck wird häufig der atmosphärische Luftdruck eingesetzt, indem die Klebeform mit einer luftundurchlässigen Folie abgedeckt und evakuiert wird. Um eine gute Verklebung und eine einwandfreie Oberfläche zu erhalten, ist es erforderlich, dass die Luft zwischen den Schichten sowie gegebenenfalls überschüssiger Klebstoff möglichst vollständig entweichen kann. Zu diesem Zweck wird die Kernschicht oft mit einer grösseren Anzahl paralleler Rillen oder Nuten versehen, durch die die Luft an den Rand des Verbundelementes gelangen kann. Beim Einsatz handelsüblicher Profile, beispielsweise in U-, Z- oder H-Querschnitt, ist dies jedoch nicht mehr gewährleistet. Zur Erreichung einer hohen mechanischen Stabilität müssen diese nämlich sowohl mit den Deckschichten, als auch mit der Schmalseite der Kernschicht vollflächig verklebt werden, so dass kein Zwischenraum für das Entweichen der Luft bleibt. Als Folge bilden sich insbesondere bei der Herstellung grossflächiger Verbundelemente insbesondere im Bereich der Profile oft Luftblasen, die zu einer erheblichen Verschlechterung der mechanischen Eigenschaften führen und zudem auf der Bauteilaussenseite sichtbar sein können.

Es war daher Aufgabe der vorliegenden Erfindung, neue Profile bereitzustellen, die bei der Herstellung von plattenförmigen Verbundelementen nicht zu diesen nachteiligen Erscheinungen Anlass geben.

Erfindungsgemäss wird diese Aufgabe durch die Profile nach Patentanspruch 1 gelöst.
Die Profile bestehen in ihrer einfachsten Form aus zwei im wesentlichen parallelen Schenkeln, die mit ihrer Innenseite oder Aussenseite als Anlagefläche für jeweils eine der Deckschichten dienen, einem Verbindungssteg zwischen den Schenkeln und einer Anlagefläche für die Schmalseite der Kernschicht. Der geometrische Abstand der Schenkel, d. h. der Abstand der durch die Anlageflächen für die Deckschichten definierten Ebenen, entspricht dem Abstand der Deckschichten der mit dem Profil herzustellenden Verbundelemente; die Anlagefläche für die Kernschicht liegt zwischen diesen Ebenen. Je nach der relativen Lage der Schenkel zueinander und zum Verbindungssteg kann das Profil einen im wesentlichen U-, Z- oder H-förmigen Querschnitt aufweisen, wobei selbstverständlich auch Übergangsformen möglich sind. Durch das Vorhandensein mehrerer Verbindungsstege zwischen den Schenkeln sind auch Kombinationen dieser Grundformen möglich. Beispielsweise enthält eine bevorzugte Form zwei gegenüberliegende Anlageflächen für die Kernschicht und eignet sich damit besonders als Einlage- oder Verbindungsprofil.
Die Kernschicht-Anlagefläche, die vorzugsweise senkrecht zu den Schenkeln des Profils steht, schliesst erfindungsgemäss nicht wie bei einem einfachen U-, Z- oder H-Profil unmittelbar an diese an, sondern ist durch wenigstens einen in Längsrichtung des Profils verlaufenden Distanzsteg von dem Verbindungssteg getrennt. Der (bei mehreren Distanzstegen: jeder äussere) Distanzsteg schliesst hierbei nicht an einen Aussenrand der Kernschicht-Anlagefläche an, sondern springt von diesem zurück, so dass ein in Längsrichtung des Profils verlaufender Kanal entsteht. Die Kernschicht-Anlagefläche ist weiterhin so ausgebildet, dass zwischen ihren äusseren (Längs-) Rändern und den Anlageflächen für die Deckschichten sowie den durch diese Flächen definierten Ebenen jeweils ein in Längsrichtung des Profils verlaufender Zwischenraum bleibt. Die Zwischenräume sind vorzugsweise über die ganze Länge des Profils durchgehend, können aber auch beispielsweise durch entsprechende Ausbildung der Ränder auf kurzen Abschnitten unterbrochen sein. Hierdurch bildet im eingebauten Zustand die Anlagefläche für die Kernschicht mit ihren Rändern keinen dichten Abschluss zu den Deckschichten, sondern es verbleibt jeweils ein durchgehender oder unterbrochener Spalt, der mit mindestens einem der vorstehend beschriebenen in Längsrichtung des Profils verlaufenden Kanäle in Verbindung steht. Vorzugsweise ist für jeden Spalt ein entsprechender Kanal im Profil vorhanden, wobei das Profil gegebenenfalls noch zusätzliche offene oder geschlossene Kanäle enthalten kann. Durch dieses System von Spalten und Kanälen kann bei der Fertigung der Verbundelemente sowohl die Luft als auch überschüssiger Klebstoff problemlos entweichen. Durch den Rücksprung jedes Distanzsteges weisen die Kanäle einen genügend grossen Querschnitt auf, der auch bei langen Profilen ein rasches Entweichen der Luft ermöglicht und nicht durch etwa eindringenden überschüssigen Klebstoff verstopft werden kann. Hierdurch wird insbesondere bei der Vakuum-Verklebung eine verbesserte Evakuierung des Bauteilinneren erreicht, was auch die Festigkeit der flächigen Klebeverbindungen zwischen Kernschicht und Deckschichten erhöht.

Die Anlageflächen für die Deckschichten und/oder die Kernschicht werden vorzugsweise mit Rillen oder Nuten versehen. Diese Rillen oder Nuten können beim Verkleben der Verbundelemente einen Teil des Klebers aufnehmen, gegebenenfalls auch Material der Deckschicht, wenn diese leicht verformbar ist. Hierdurch kommt es zu einem gewissen Verzahnungseffekt bzw. einer formschlüssigen Verbindung, die die Festigkeit der Klebeverbindung erhöht. Aus mechanischen und fertigungstechnischen Gründen verlaufen diese Rillen oder Nuten vorzugsweise in Längsrichtung des Profils.

In einer besonders bevorzugten Bauform befinden sich die Anlageflächen für die Deckschichten auf den vom Verbindungssteg abgewandten Seiten der Schenkel, d. h. auf den Aussenseiten des Profils. Im eingebauten Zustand berühren sie die Deckschichten des Verbundelementes von innen, der Abstand der Anlageflächen stimmt mit der Dicke der Kernschicht überein. Profile dieser Bauform eignen sich sowohl als Einlageprofile im Inneren des Verbundelementes als auch als Randprofile.

In einer anderen bevorzugten Bauform befinden sich die Anlageflächen für die Deckschichten auf den dem Verbindungssteg zugewandten Seiten der Schenkel, also auf den Innenseiten des Profils. Sie berühren in eingebautem Zustand die Deckschichten des Verbundelementes von aussen, der Abstand der Anlageflächen entspricht der Gesamtdicke des Verbundelementes. Profile dieser Bauform eignen sich als Randprofile (mit U- oder H- förmigem Querschnitt) oder als Verbindungsprofile für zwei Verbundelemente (mit H- förmigem Querschnitt).

Bei einer weiteren Bauform befindet sich die Anlagefläche für eine Deckschicht auf der dem Verbindungssteg zugewandten Seite des einen Schenkels und die Anlagefläche für die andere Deckschicht auf der von dem Verbindungssteg abgewandten Seite des anderen Schenkels. In eingebautem Zustand wird also die eine Deckschicht von aussen und die andere von innen berührt. Der Abstand der Anlageflächen entspricht der Dicke der Kernschicht zuzüglich der einer Deckschicht. Profile dieser Bauform eignen sich als Randprofile, insbesondere wenn das Verbundelement einseitig auf einen Tragrahmen montiert werden und auf der anderen Seite eine glatte Fläche bilden soll. Die Befestigung des Verbundelementes kann dann direkt am Randprofil erfolgen.

Zur Erleichterung der Montage des fertigen Verbundelementes und/oder der Verbesserung der mechanischen Eigenschaften können erfindungsgemässe Randprofile ausserhalb der Anlageflächen für die Kern- und Deckschichten mit Distanz- und/oder Auflageelementen versehen werden, beispielsweise mit angeformten Distanzleisten. Ebenso können Halteelemente vorgesehen werden, welche zur Aufnahme der Distanz- oder Auflageelemente geeignet sind. Letztere können dann beispielsweise aus einem anderen Material bestehen, als das eigentliche Profil.

In einer besonders bevorzugten Ausführungsform sind zu diesem Zweck in die Profile in Längsrichtung verlaufende Nuten eingearbeitet, in die beispielsweise Distanzstreifen aus elastischem Material oder - bei entsprechendem Querschnitt der Nut - Befestigungsmuttern eingelegt werden können.

Weiterhin können die Profile noch zusätzliche Kanäle zur Verlegung von Leitungen aller Art enthalten, wobei diese Kanäle gegebenenfalls auch selbst als Leitungen, z. B. für Luft oder ein Heizmedium, dienen können.

Als Material für die Profile eignen sich beispielsweise Metalle, insbesondere Stahl oder Aluminium(legierungen), oder auch feste Kunststoffe. Sie können nach materialüblichen Verfahren hergestellt werden, beispielsweise durch Abkanten oder Rollformen von Blechen, durch Fräsen aus Vollmaterial oder durch Pressen bzw. Extrudieren von plastisch verformbaren Werkstoffen. Vorzugsweise werden sie durch Strangpressen von Aluminiumlegierungen hergestellt. Dieses Verfahren eignet sich besonders gut zur Herstellung komplizierter Profilquerschnitte in einem Arbeitsgang ohne Nachbearbeitung.
Gegenstand der Erfindung sind auch die aus wenigstens einer Kernschicht, zwei flächig damit verbundenen Deckschichten und wenigstens einem erfindungsgemässen Profil bestehenden plattenförmigen Verbundelemente.
Als Material für die Kernschicht eignen sich grundsätzlich alle auf diesem technischen Gebiet üblichen Materialien, insbesondere geschlossenzellige Hartschaumstoffe, beispielsweise auf Basis von Polyvinylchlorid, Polyolefinen oder Polyurethanen. Es eignen sich auch natürliche Leichtbaumaterialien wie beispielsweise Kork oder Balsaholz oder anorganische Materialien wie beispielsweise Schaumglas.
Als Deckschichten eignen sich beispielsweise Metallbleche, insbesondere solche aus Stahl- oder Aluminiumlegierungen, Kunststoffolien oder -tafeln, insbesondere mit Faserverstärkung, aber auch Materialien wie Kraftpapier, Spanplatten oder Sperrholz.
Die flächige Verbindung zwischen Kern- und Deckschichten ist vorzugsweise eine Klebeverbindung, je nach Materialkombination kommen aber auch andere Verbindungstypen in Frage, beispielsweise eine Schweissverbindung.

Die Kernschicht ist vorzugsweise auf wenigstens einer der mit den Deckschichten verklebten Flächen mit einem System von im wesentlichen untereinander parallelen Rillen oder Nuten versehen. Diese sind vorzugsweise so angeordnet, dass sie mit der Längsrichtung des Profils/der Profile einen Winkel bilden.

In einer bevorzugten Ausführungsform der Verbundelemente enthalten diese ein erfindungsgemässes Randprofil und wenigstens eine der Deckschichten ist als Randabschluss um eine entsprechend ausgebildete Kante des Randprofils herumgezogen, vorzugsweise um einen Winkel von ca. 90° bis ca. 180°. Hierdurch wird sowohl eine Verbesserung der Zugfestigkeit der Verbindung der Deckschicht mit dem Profil als auch ein optisch ansprechender Rand erzielt, und das Profil ist an dem eingebauten Verbundelement nicht sichtbar.

Die Verbundelemente werden erfindungsgemäss nach Anspruch 12 hergestellt, indem die Deckschichten und/oder die vorgefertigte Kernschicht an den vorgesehenen Berührungsflächen mindestens einseitig mit einem Klebstoff versehen, miteinander und mit dem/den gegebenenfalls auch mit Klebstoff beschichteten Profil(en) in der vorgesehenen Anordnung zusammengefügt und durch äusseren Druck miteinander verklebt. Zur Aktivierung und/oder schnelleren Aushärtung des Klebers kann die ganze Anordnung gegebenenfalls erwärmt werden.

Zur Vermeidung von Lufteinschlüssen bei der Verklebung und zum Zusammenwirken mit den erfindungsgemäss in den Profilen vorhandenen Kanälen wird vorteilhaft eine Kernschicht verwendet, die auf einer oder beiden mit den Deckschichten zu verklebenden Flächen mit einem System von untereinander im wesentlichen parallelen Rillen oder Nuten versehen ist. Die Richtung dieser Rillen oder Nuten bildet zweckmässig mit der Längsrichtung des Profils/der Profile einen Winkel, vorzugsweise ungefähr einen rechten Winkel.

Als äusserer Druck bei der Verklebung wird vorzugsweise der atmosphärische Luftdruck eingesetzt, indem die Luft aus den Zwischenräumen zwischen den Schichten abgesaugt, also ein (teilweises) Vakuum erzeugt wird.

Dies wird vorzugsweise derart bewerkstelligt, dass die vorbereiteten Komponenten des Verbundelementes auf einer festen Unterlage angeordnet und mit einer flexiblen, luftundurchlässigen Folie abgedeckt werden. Dann wird der von der Unterlage und der Folie umschlossene Raum mit dem Verbundelement evakuiert, so dass die Luft aus den Zwischenräumen durch die Kanäle des Profils/der Profile entweicht und der äussere Luftdruck die ganze Anordnung zusammenpresst.

Zur Herstellung von nicht-ebenen Verbundelementen wie beispielsweise gewölbten Fahrzeugdächern wird vorteilhaft eine entsprechend geformte Unterlage verwendet.

Vorzugsweise wird zur Erreichung eines sauberen Randabschlusses und einer erhöhten Festigkeit wenigstens eine der Deckschichten so bemessen, dass sie nach der Verklebung über eine äussere Kante eines Randprofils übersteht. Der überstehende Teil wird dann um diese Kante herumgebogen, vorzugsweise um einen Winkel von ca. 90° bis ca. 180°.

Unter Verwendung der erfindungsgemässen Profile wurden beispielsweise 2,2 x 12,5 m² grosse Verbundelemente hergestellt. Diese wiesen gegenüber den mit herkömmlichen Profilen hergestellten Verbundelementen gleicher Abmessungen erheblich bessere mechanische Eigenschaften auf, wie unter anderem mit Abschältests nachgewiesen werden konnte.

In den Zeichnungen sind einige Ausführungsbeispiele der erfindungsgemässen Profile sowie der damit hergestellten Verbundelemente schematisch dargestellt; es zeigt im einzelnen:
- Fig. 1: einen Querschnitt durch ein U-förmiges Randprofil
- Fig. 2: einen Querschnitt durch die Randpartie eines mit einem U-förmigen Randprofil ausgerüsteten Verbundelementes
- Fig. 3: einen Querschnitt durch ein Verbundelement mit Einlageprofil
- Fig. 4: einen Querschnitt durch die Randpartie eines Verbundelementes mit Z-förmigem Randprofil
- Fig. 5: einen Querschnitt durch die Randpartie eines Verbundelementes mit um die Aussenkante des Randprofils herumgezogener Deckschicht
- Fig. 6: einen Querschnitt durch die Randpartie eines Verbundelementes mit in das Randprofil eingearbeiteter Befestigungsnut
- Fig. 7: einen Querschnitt durch die Anordnung bei der Verklebung der Komponenten eines Verbundelementes
- Fig. 8: eine perspektivische Darstellung der Komponenten eines Verbundelementes.

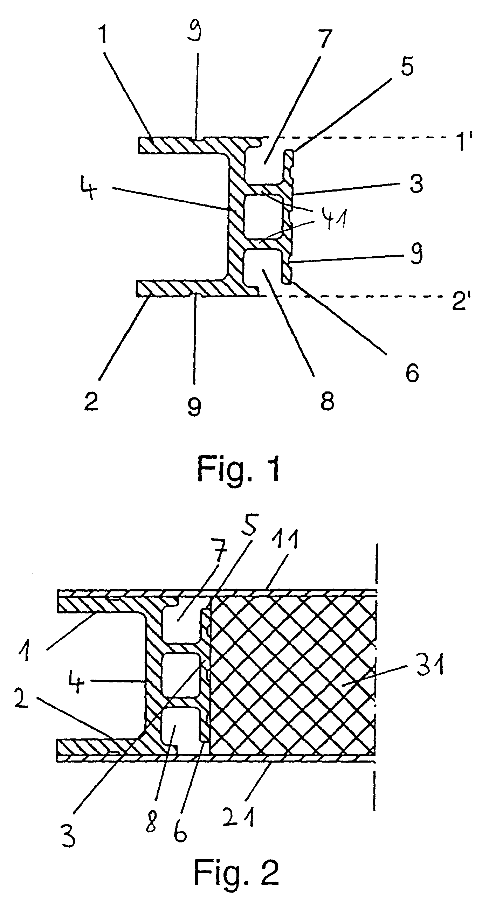

Fig. 1 zeigt den Querschnitt durch ein im wesentlichen U-förmiges Randprofil mit zwei Schenkeln 1, 2, deren Aussenseiten als Anlageflächen für die Deckschichten dienen und die Ebenen 1', 2' definieren, einer Anlagefläche 3 mit Rändern 5, 6 für die Kernschicht, einem Verbindungssteg 4, zwei Distanzstegen 41, zwei offenen Kanälen 7, 8 und in die Anlageflächen eingearbeiteten Rillen 9.

Fig. 2 zeigt das gleiche Randprofil wie Fig. 1, jedoch in eingebautem Zustand mit den Deckschichten 11, 21 und der Kernschicht 31. An den offenen Kanälen 7, 8 sind die Zwischenräume zwischen den Deckschichten 11, 21 und den Rändern 5, 6 der Anlagefläche 3 für die Kernschicht 31 zu erkennen.

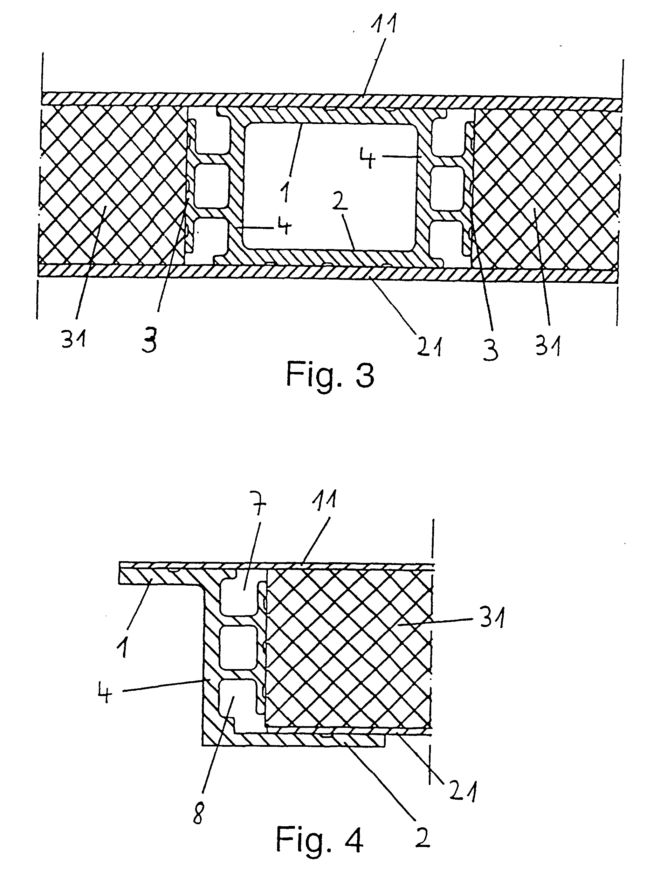

Fig. 3 zeigt im Querschnitt ein Einlageprofil in eingebautem Zustand. Das Profil weist zwei gegenüberliegende Anlageflächen 3 für je eine Kernschicht 31 auf und wird durch die Deckschichten 11, 21 überdeckt, so dass es in der Aufsicht auf das Verbundelement nicht zu sehen ist. Das Profil entspricht einer spiegelbildlichen Verdopplung des Profils in Fig. 1.

Fig. 4 zeigt ein im Querschnitt Z-förmiges Randprofil in eingebautem Zustand. Die Anlagefläche des Schenkels 1 für die Deckschicht 11 liegt auf der vom Verbindungssteg 4 abgewandten Seite, diejenige des Schenkels 2 für die Deckschicht 21 auf der dem Verbindungssteg zugewandten Seite. In den Bereichen zwischen den Schenkeln 1, 2 und der Kernschicht 31 sind die offenen Kanäle 7, 8 dargestellt. Mit den freien Flächen der Schenkel 1, 2 und des Verbindungsstegs 4 kann das Verbundelement beispielsweise auf anderen Konstruktionsteilen aufliegen, ohne die Deckschichten 11, 21 zu belasten. Die eine Deckschicht 11 schliesst mit der Aussenkante des Schenkels 1, die andere Deckschicht 21 mit der Kernschicht 31 bündig ab.

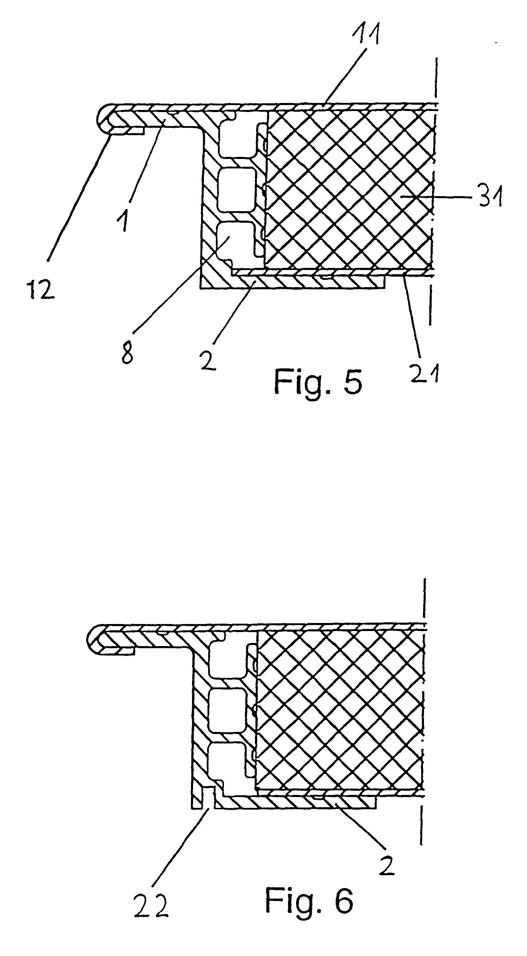

Fig. 5 zeigt im Prinzip die gleiche Anordnung wie Fig. 4, jedoch ist die eine Deckschicht 11 mit ihrem Rand 12 um ca. 180° um die Aussenkante des Schenkels 1 herumgebogen und die andere Deckschicht 21 reicht bis zu einer Anschlagkante im Bereich des Kanals 8.

Fig. 6 zeigt eine ähnliche Anordnung wie Fig. 5, jedoch ist zusätzlich in die freie Fläche des Schenkels 2 eine Nut 22 eingearbeitet, in welche beispielsweise eine elastische Dichtung eingelegt werden kann.

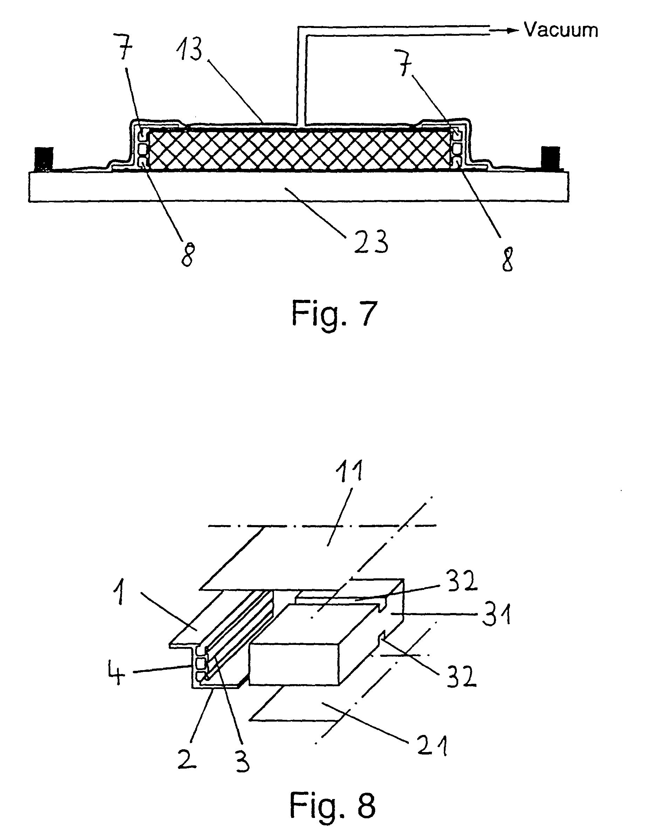

Fig. 7 zeigt schematisch die Verklebung von Kernschicht, Deckschicht und Randprofilen gemäss Fig. 4 zu einem Verbundelement. Die Einzelteile sind auf einer festen Unterlage 23 angeordnet und mit einer flexiblen luftundurchlässigen Folie 13 abgedeckt. Der Raum zwischen Unterlage und Folie wird evakuiert, so dass der äussere Luftdruck die Anordnung zusammenpresst und die zwischen den Einzelteilen befindliche Luft durch die Kanäle 7, 8 entweichen kann.

Fig. 8 zeigt perspektivisch die Einzelteile eines Verbundelementes, nämlich ein Randprofil gemäss Fig. 4 mit den beiden Schenkeln 1, 2 und der Anlagefläche 3 für die Kernschicht, die Deckschichten 11, 21 und die Kernschicht 31. In die Kernschicht 31 sind auf der Ober- und Unterseite Rillen 32 eingearbeitet, von denen jeweils nur eine schematisch dargestellt ist. Die Rillen 32 verlaufen ungefähr rechtwinklig zur Längsrichtung des Randprofils.

## Patentansprüche

1. Profil, insbesondere für die Verstärkung und/oder den Randabschluss von plattenförmigen, aus wenigstens einer Kernschicht und zwei durch die Kernschicht verbundenen Deckschichten bestehenden Verbundelementen, mit zwei im wesentlichen parallelen Schenkeln (1, 2), die als innere oder äussere Anlageflächen für die Deckschichten (11, 21) dienen und deren geometrischer Abstand dem Abstand der Deckschichten entspricht, wenigstens einer zwischen den durch die genannten Anlageflächen definierten Ebenen angeordneten Anlagefläche (3) für die Schmalseite der Kernschicht (31) und wenigstens einem Verbindungssteg (4) zwischen den Schenkeln, welcher mit diesen eine im Querschnitt im wesentlichen U-, Z- oder H- förmige Anordnung bildet, wobei sich bei Vorhandensein mehrerer Stege gegebenenfalls Kombinationen dieser Formen ergeben können, **dadurch gekennzeichnet**, dass die Anlagefläche (3) für die Schmalseite der Kernschicht durch wenigstens einen von den äusseren Rändern (5, 6) der Anlagefläche (3) zurückspringenden Distanzsteg (41) vom Verbindungssteg (4) getrennt ist und zwischen den Anlageflächen für die Deckschichten sowie den durch sie definierten Ebenen (1', 2') und den äusseren Rändern (5, 6) der Anlagefläche(n) (3) für die Kernschicht jeweils ein in Längsrichtung des Profils verlaufender durchgehender oder unterbrochener Zwischenraum vorhanden ist, der mit wenigstens einem in Längsrichtung des Profils verlaufenden Kanal (7, 8) in Verbindung steht.

2. Profil nach Anspruch 1, dadurch gekennzeichnet, dass in wenigstens eine der Anlageflächen für die Kern- und/oder Deckschicht(en) Rillen oder Nuten (9) eingearbeitet sind.

3. Profil nach Anspruch 2, dadurch gekennzeichnet, dass die Rillen oder Nuten (9) in Längsrichtung des Profils verlaufen.

4. Profil nach einem der Ansprüche 1 bis 3, dadurch gekennzeichnet, dass sich die Anlageflächen für die Deckschichten auf den vom Verbindungssteg (4) abgewandten Seiten der Schenkel (1, 2) befinden.

5. Randprofil nach einem der Ansprüche 1 bis 3, dadurch gekennzeichnet, dass sich die Anlageflächen für die Deckschichten auf den dem Verbindungssteg (4) zugewandten Seiten der Schenkel (1, 2) befinden.

6. Randprofil nach einem der Ansprüche 1 bis 3, dadurch gekennzeichnet, dass sich eine der Anlageflächen für die Deckschichten auf der dem Verbindungssteg (4) zugewandten Seite des einen Schenkels (1) und die andere auf der von dem Verbindungssteg abgewandten Seite des anderen Schenkels (2) befindet.

7. Randprofil nach einem der Ansprüche 1 bis 6, dadurch gekennzeichnet, dass ausserhalb der Anlageflächen für die Kern- und Deckschichten mindestens ein Distanz- und/oder Auflageelement oder ein zur Aufnahme eines solchen Elements geeignetes Halteelement vorhanden ist.

8. Randprofil nach Anspruch 7, dadurch gekennzeichnet, dass als Halteelement wenigstens eine Nut (22) in Längsrichtung in das Profil eingearbeitet ist.

9. Plattenförmiges Verbundelement, bestehend aus wenigstens einer Kernschicht (31) und zwei damit flächig verbundenen Deckschichten (11, 21) sowie wenigstens einem Verstärkungs- und/oder Randprofil gemäss Anspruch 1.

10. Verbundelement nach Anspruch 9, dadurch gekennzeichnet, dass die Kernschicht (31) mit den Deckschichten (11, 21) verklebt und wenigstens eine der Klebeflächen mit im wesentlichen untereinander parallelen Rillen oder Nuten (32) versehen ist, deren Richtung mit der Längsrichtung des Profils/der Profile vorzugsweise einen Winkel bildet.

11. Verbundelement nach Anspruch 9 oder 10, dadurch gekennzeichnet, dass es wenigstens ein Randprofil enthält und als Randabschluss wenigstens eine der Deckschichten (11, 21) um eine entsprechend ausgebildete Kante des Randprofils herumgezogen ist (12).

12. Verfahren zur Herstellung von Verbundelementen gemäss Anspruch 9, dadurch gekennzeichnet, dass die Deckschichten (11, 21) und/oder die vorgefertigte Kernschicht (31) an den vorgesehenen Berührungsflächen mindestens einseitig mit einem Klebstoff versehen, miteinander und dem/den gegebenenfalls mit Klebstoff beschichteten Profil(en) in der vorgesehenen Anordnung zusammengefügt und durch äusseren Druck miteinander verklebt werden.

13. Verfahren nach Anspruch 12, dadurch gekennzeichnet, dass eine Kernschicht verwendet wird, die auf wenigstens einer der mit den Deckschichten zu verklebenden Flächen mit im wesentlichen parallelen Rillen oder Nuten (32) versehen ist, deren Richtung mit der Längsrichtung des Profils/der Profile einen Winkel bildet.

14. Verfahren nach Anspruch 12 oder 13, dadurch gekennzeichnet, dass als äusserer Druck der atmosphärische Luftdruck angewandt wird, indem die Luft aus den Zwischenräumen zwischen den Schichten abgesaugt wird.

15. Verfahren nach Anspruch 14, dadurch gekennzeichnet, dass die Komponenten des Verbundelementes auf einer festen Unterlage (23) angeordnet und mit einer flexiblen luftundurchlässigen Folie (13) abgedeckt werden und der von der Unterlage und der Folie umschlossene, das Verbundelement enthaltende Raum evakuiert wird, so dass die Luft aus den Zwischenräumen durch die Kanäle (7, 8) des Profils/der Profile entweicht.

16. Verfahren nach Anspruch 15, dadurch gekennzeichnet, dass zur Herstellung eines nicht-ebenen Verbundelementes eine entsprechend geformte Unterlage verwendet wird.

17. Verfahren nach einem oder mehreren der Ansprüche 12 bis 16, dadurch gekennzeichnet, dass wenigstens ein Profil als Randprofil eingesetzt wird, wenigstens eine der Deckschichten (11, 21) in verklebtem Zustand über die äussere Kante des Randprofils übersteht und der überstehende Teil (12) um diese Kante herumgebogen wird.

## Claims

1. Sectional member, in particular for the reinforcement and/or the edge closure of plate-shaped composite elements, which comprise at least one core layer and two outer layers which are connected by the core layer, having two substantially parallel limbs (1, 2), which act as inner or outer contact faces for the outer layers (11, 21) and whose geometrical spacing corresponds to the spacing of the outer layers, having at least one contact face (3), which is arranged between the planes defined by those contact faces, for the narrow side of the core layer (31) and having at least one connection web (4) between the limbs, which web (4) forms, with the limbs, an arrangement which is substantially U, Z or H-shaped in cross-section, it optionally being possible for combinations of those shapes to be produced if there are several webs, characterised in that the contact face (3) for the narrow side of the core layer is separated from the connection web (4) by at least one spacer web (41), which extends backwards from the outer edges (5, 6) of the contact face (3), and in that there is provided, between the contact faces for the outer layers as well as the planes (1', 2') defined thereby and the outer edges (5, 6) of the contact face(s) (3) for the core layer, a respective continuous or discontinuous intermediate space which extends in the longitudinal direction of the sectional member and which is connected to at least one channel (7, 8) which extends in the longitudinal direction of the sectional member.

2. Sectional member according to claim 1, characterised in that grooves or channels (9) are incorporated into at least one of the contact faces for the core and/or outer layer(s).

3. Sectional member according to claim 2, characterised in that the grooves or channels (9) extend in the longitudinal direction of the sectional member.

4. Sectional member according to any one of claims 1 to 3, characterised in that the contact faces for the outer layers are located on the faces of the limbs (1, 2) that are remote from the connection web (4).

5. Edge sectional member according to any one of claims 1 to 3, characterised in that the contact faces for the outer layers are located on the faces of the limbs (1, 2) that face the connection web (4).

6. Edge sectional member according to any one of claims 1 to 3, characterised in that one of the contact faces for the outer layers is located on the face of the first limb (1) that faces the connection web (4) and the other is located on the face of the other limb (2) that is remote from the connection web.

7. Edge sectional member according to any one of claims 1 to 6, characterised in that at least one spacing and/or supporting element or a holding element, which is suitable for receiving such an element, is located outside the contact faces for the core and outer layers.

8. Edge sectional member according to claim 7, characterised in that at least one channel (22) in a longitudinal direction is incorporated into the sectional member as a holding element.

9. Plate-shaped composite element, comprising at least one core layer (31) and two outer layers (11, 21), which are connected thereto in a planar manner, and at least one reinforcement and/or edge sectional member according to claim 1.

10. Composite element according to claim 9, characterised in that the core layer (31) is adhesively bonded to the outer layers (11, 21) and at least one of the adhesive faces is provided with grooves or channels (32) which are substantially parallel with each other and whose orientation preferably forms an angle with the longitudinal direction of the sectional member(s).

11. Composite element according to claim 9 or claim 10, characterised in that it contains at least one edge sectional member and, as the edge closure, at least one of the outer layers (11, 21) is drawn around a correspondingly formed edge of the edge sectional member (12).

12. Method for producing composite elements according to claim 9, characterised in that the outer layers (11, 21) and/or the prefabricated core layer (31) are provided with an adhesive on at least one side of the contact faces provided, are joined to each other and to the sectional member(s), which is/are optionally coated with adhesive, in the arrangement provided and are adhesively bonded to each other by external pressure.

13. Method according to claim 12, characterised in that a core layer is used and is provided on at least one of the faces, which are to be adhesively bonded to the outer layers, with substantially parallel grooves or channels (32) whose orientation forms an angle with the longitudinal direction of the sectional member(s).

14. Method according to claim 12 or claim 13, characterised in that atmospheric air pressure is used as the external pressure by drawing the air out of the intermediate spaces between the layers.

15. Method according to claim 14, characterised in that the components of the composite element are arranged on a fixed substrate (23) and are covered with a flexible air-impermeable film (13) and the space, which is enclosed by the substrate and the film and which contains the composite element, is evacuated so that the air is discharged from the intermediate spaces through the channels (7, 8) of the sectional member(s).

16. Method according to claim 15, characterised in that, in order to produce an uneven composite element, a correspondingly shaped substrate is used.

17. Method according to one or more of claims 12 to 16, characterised in that at least one sectional member is used as the edge sectional member, at least one of the outer layers (11, 21) in the adhesively-bonded state protrudes beyond the outer edge of the edge sectional member and the protruding portion (12) is bent around that edge.

## Revendications

1. Profil, notamment pour le renforcement et/ou la bordure d'éléments composites sous forme de plaques, formé d'au moins une couche centrale et de deux couches de couverture reliées par la couche centrale, comprenant deux branches (1, 2) essentiellement parallèles qui servent de surfaces d'appui intérieure et extérieure pour les couches de couverture (1, 2) et dont la distance géométrique correspond à la distance des couches de couverture, au moins une surface d'appui (3) pour le petit côté de la couche centrale (31), située entre les plans définis par les surfaces d'appui mentionnées, et au moins un élément intermédiaire de liaison (4) entre les branches, qui forme avec celles-ci un arrangement dont la section transversale a essentiellement une forme en U, en Z ou en H, des combinaisons de ces formes pouvant être obtenues, le cas échéant, lorsqu'il y a plusieurs éléments intermédiaires, caractérisé en ce que la surface d'appui (3) pour le petit côté de la couche centrale est séparée de l'élément intermédiaire de liaison (4) par au moins un élément intermédiaire d'écartement (41) en retrait par rapport aux bords extérieurs (5, 6) de la surface d'appui (3) et en ce qu'un espace intermédiaire continu ou interrompu s'étendant, à chaque fois, dans la direction longitudinale du profil, est présent entre les surfaces d'appui pour les couches de couverture, ainsi que les plans (1', 2') qu'elles définissent, et les bords extérieurs (5, 6) de la /des surface/s d'appui (3) pour la couche centrale, lequel espace intermédiaire communique avec au moins un canal (7, 8) s'étendant dans la direction longitudinale du profil.

2. Profil selon la revendication 1, caractérisé en ce qu'au moins une des surfaces d'appui pour la couche centrale et/ou les couches de couverture est pourvue de rainures ou gorges (9).

3. Profil selon la revendication 2, caractérisé en ce que les rainures ou gorges (9) s'étendent dans la direction longitudinale du profil.

4. Profil selon l'une des revendications 1 à 3, caractérisé en ce que les surfaces d'appui pour les couches de couverture sont situées sur les côtés des branches (1, 2) éloignés de l'élément intermédiaire de liaison (4).

5. Profil de bordure selon l'une des revendications 1 à 3, caractérisé en ce que les surfaces d'appui pour les couches de couverture sont situées sur les côtés des branches (1, 2) tournés vers l'élément intermédiaire de liaison (4).

6. Profil de bordure selon l'une des revendications 1 à 3, caractérisé en ce qu'une des surfaces d'appui pour les couches de couverture est située sur le côté de l'une des branches (1) tourné vers l'élément intermédiaire de liaison (4) et l'autre est située sur le côté de l'autre branche (2) éloigné de l'élément intermédiaire de liaison.

7. Profil de bordure selon l'une des revendications 1 à 6, caractérisé en ce qu'au moins un élément d'écartement et/ou d'appui ou un élément de maintien approprié pour un tel élément est présent à l'extérieur des surfaces d'appui pour les couches centrale ou de couverture.

8. Profil de bordure selon la revendication 7, caractérisé en ce qu'au moins une gorge (22) est formée dans le profil, en tant qu'élément de maintien, dans la direction longitudinale.

9. Elément composite sous forme de plaque, formé d'au moins une couche centrale (31) et de deux couches de couverture (11, 21) reliées à cette dernière sur toute la surface, et d'au moins un profil de renforcement et/ou de bordure selon la revendication 1.

10. Elément composite selon la revendication 9, caractérisé en ce que la couche centrale (31) est collée avec les couches de couverture (11, 21) et au moins une des surfaces de collage est pourvue de rainures ou gorges (32) essentiellement parallèles les unes aux autres et dont la direction forme de préférence un angle avec la direction longitudinale du profil/des profils.

11. Elément composite selon la revendication 9 ou 10, caractérisé en ce qu'il contient au moins un profil de bordure et au moins une des couches de couverture (11, 21) passe, en tant que bordure (12), autour d'une arête du profil de bordure exécutée de manière correspondante.

12. Procédé de fabrication d'éléments composites selon la revendication 9, caractérisé en ce que les couches de couverture (11, 21) et/ou la couche centrale (31) préalablement fabriquée sont pourvues d'une colle, au moins sur un côté, sur les surfaces de contact prévues et sont assemblées les unes avec les autres et avec le/les profil/s enduit/s de colle, le cas échéant, selon l'arrangement prévu et sont collées les unes aux autres sous l'action d'une pression extérieure.

13. Procédé selon la revendication 12, caractérisé en ce qu'on utilise une couche centrale qui est pourvue, sur au moins une des surfaces devant être collées avec les couches de couverture, de rainures ou gorges (32) essentiellement parallèles dont la direction forme un angle avec la direction longitudinale du profil/des profils.

14. Procédé selon la revendication 12 ou 13, caractérisé en ce qu'on utilise, en tant que pression extérieure, la pression de l'air atmosphérique en aspirant l'air des espaces intermédiaires entre les couches.

15. Procédé selon la revendication 14, caractérisé en ce que les composants de l'élément composite sont placés sur une base fixe (23) et couverts d'une feuille flexible (13) imperméable à l'air, et on fait le vide dans l'espace enfermé par la base et la feuille et contenant l'élément composite, de manière à ce que l'air s'échappe des espaces intermédiaires par les canaux (7, 8) du profil/des profils.

16. Procédé selon la revendication 15, caractérisé en ce que, pour la fabrication d'un élément composite non plan, on utilise une base formée de manière correspondante.

17. Procédé selon l'une ou plusieurs des revendications 12 à 16, caractérisé en ce qu'on utilise au moins un profil en tant que profil de bordure, au moins une des couches de couverture (11, 21) fait saillie, à l'état collé, sur l'arête extérieure du profil de bordure et la partie saillante (12) est pliée autour de cette arête.
